# FASCICULE DE BREVET EUROPEEN

(11) **EP 0 771 484 B1**
(45) Date de publication et mention de la délivrance du brevet: **11.08.1999**
(21) Numéro de dépôt: 96920899.0
(22) Date de dépôt: 05.06.1996
(51) Int. Cl.: H02B 1/044

(54) **DISPOSITIF DE COMMANDE OU DE SIGNALISATION ELECTRIQUE A EMBASE DE FIXATION**
BEFEHLS UND MELDE ELEKTROGERÄT MIT HALTERUNGSFLÄCHE
ELECTRIC SIGNALLING OR CONTROL DEVICE WITH FIXING BASE

(30) Priorité: 07.06.1995 FR 9506803
(43) Date de publication de la demande: 07.05.1997
(73) Titulaire: Schneider Electric Industries SA, 92100 Boulogne Billancourt (FR)
(72) Inventeur: CUINGNET, Patrick, F-16800 Soyaux (FR)
(74) Mandataire: Carias, Alain
(86) Numéro de dépôt international: FR9600842
(87) Numéro de publication internationale: WO9641406

(56) Documents cités:
- WO-A-91/07790

## Description

La présente invention concerne un dispositif de commande ou de signalisation électrique tel qu'un bouton-poussoir, voyant ou organe analogue comprenant un élément de dialogue destiné à être posé sur un côté d'une paroi de support, cet élément étant prolongé par une partie tubulaire à engager dans un orifice de la paroi pour recevoir, de l'autre côté de celle-ci, des moyens de fixation à la paroi et un bloc électrique tel qu'un bloc de contact interrupteur ou un bloc auxiliaire.

Les moyens de fixation précités peuvent comprendre un écrou vissé sur un filetage de la partie tubulaire du dispositif ; lorsqu'on souhaite que la fixation soit particulièrement résistante et durable, il est généralement préférable de profiter de l'association d'une embase porteuse des blocs de contact à la partie tubulaire pour adjoindre à cette embase des moyens d'accrochage tels que des vis pointeau ou des bras d'accrochage pivotants déplaçables au moyen d'une vis.

Un tel dispositif, décrit dans le brevet EP-452 462, comprend un levier pivotant en forme de fourche. Il a pour avantage d'être simple et robuste et de faciliter les opérations de fixation sur la paroi de support et de démontage vis-à-vis de celle-ci, l'installateur n'ayant en effet à manoeuvrer qu'une seule vis.

Toutefois, le mécanisme à levier pivotant ainsi utilisé présente certains inconvénients. S'il s'agit d'un levier du premier genre, l'opération de serrage est rapide puisque l'installateur n'exerce qu'une rotation angulaire de faible amplitude sur la vis de manoeuvre, mais l'effort transmis est réduit dans le rapport des bras de levier; s'il s'agit d'un levier du deuxième genre, l'effort transmis est augmenté, mais ce au détriment de l'amplitude de la rotation exercée sur la vis et donc du temps de serrage. De plus, le rendement mécanique est altéré par la perte d'effort au niveau des pivots du levier.

Enfin, lorsqu'un tel bouton-poussoir est monté sur des parois d'épaisseurs diverses, l'application des bras d'accrochage du levier s'effectue en des points de cette paroi situés à des distances variables de l'axe du bouton-poussoir. Il résulte de cette localisation variable de l'effort de serrage que l'on ne maîtrise pas le couple exercé sur le bouton-poussoir.

L'invention a pour but d'éviter les inconvénients décrits en garantissant à l'installateur un serrage robuste exercé au moyen d'une seule vis d'une manière indépendante des variations des cotes de montage.

Elle a aussi pour but d'assurer la transmission d'effort avec un rendement satisfaisant, de pair avec une amplitude de la course angulaire de manoeuvre, c'est-à-dire une durée de serrage, aussi faible que possible, à l'aide d'organes simples et peu encombrants.

Selon l'invention, l'embase rapportée sur la partie tubulaire du corps du dispositif comporte un coulisseau sollicité par une vis de manoeuvre et comprenant des branches d'accrochage qui encadrent la partie tubulaire et qui peuvent s'ancrer sous la paroi de support ; le coulisseau est lié à la vis et guidé en translation par des faces de guidage de l'embase ou de la partie tubulaire et les branches du coulisseau présentent chacune une arête ou une pointe d'ancrage définissant une droite d'appui déplaçable dans un plan perpendiculaire au plan du support.

Le montage du dispositif sur la paroi de support peut ainsi s'effectuer avec le compromis recherché entre l'effort transmis et la durée de serrage, avec maintien de l'appui à une distance bien déterminée de l'axe de la partie tubulaire quelle que soit l'épaisseur de la paroi.

Il peut avantageusement être prévu sur le coulisseau, du côté de son orifice de passage de la vis de manoeuvre opposé aux arêtes d'ancrage, une zone complémentaire d'appui définissant avec la droite précitée un plan d'appui parallèle au plan de support et déplaçable parallèlement à celui-ci.

L'invention sera mieux comprise à la lecture de la description, qui est faite ci-après en regard des figures, d'un mode de réalisation préférentiel.
- la figure 1 est une vue en élévation et en coupe partielle d'un bouton-poussoir fixé à une paroi mince de montage
- la figure 2 est une vue de l'embase en coupe selon le plan II-II
- la figure 3 montre schématiquement le coulisseau en vue de dessus
- la figure 4 montre en élévation une variante du coulisseau.

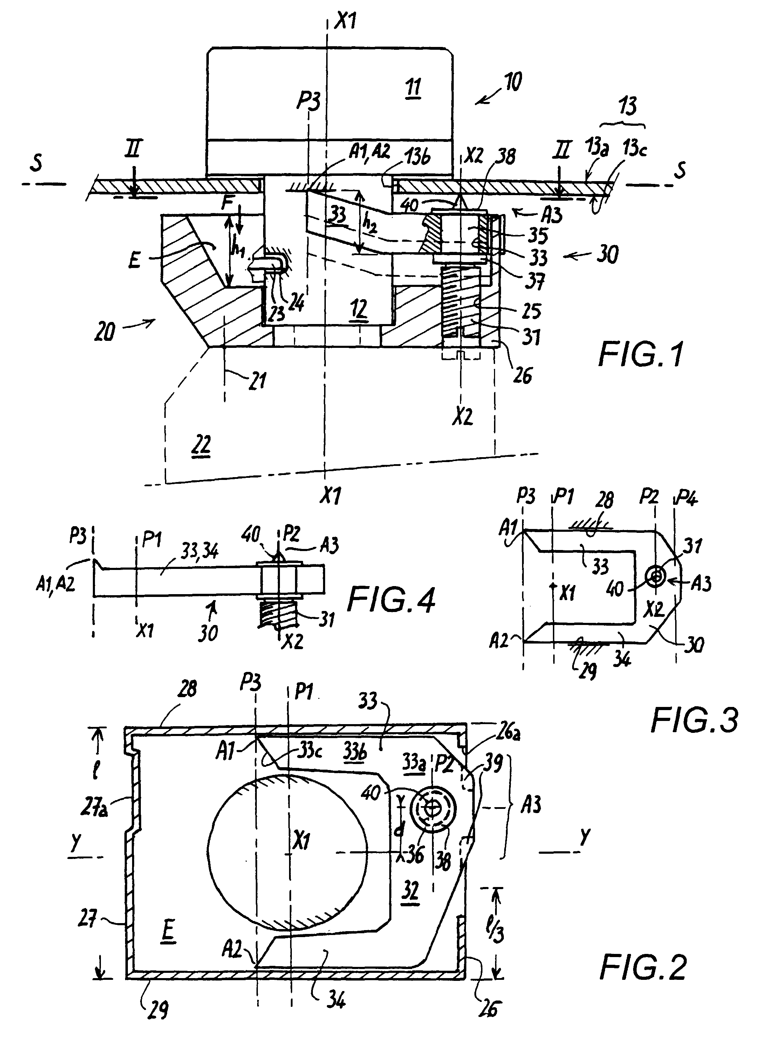

L'appareil de commande ou de signalisation électrique illustré sur la figure 1 est un bouton-poussoir comportant un corps 10 muni d'une tête 11 et d'une partie tubulaire 12 d'axe X1 et de diamètre inférieur à la largeur de la tête. Celle-ci est posée, avec éventuellement un joint et/ou une étiquette non représentés, sur une face externe 13a d'une paroi mince de support 13 en général métallique. La paroi 13 est orientée selon un plan S et peut faire partie d'une enveloppe telle qu'un pupitre, une armoire, ... ; elle comprend un orifice 13b dans lequel s'engage avec jeu la partie tubulaire 12 du bouton-poussoir.

Une embase 20 à contour général rectangulaire est associée au bouton-poussoir du côté intérieur de la paroi 13 pour porter de manière amovible, au moyen d'organes de fixation 21 qui ne seront pas décrits, des blocs électriques amovibles 22 tels que blocs de contact interrupteurs ou blocs auxiliaires. L'embase est d'une part mise en place sur la partie tubulaire 12 et en est rendue solidaire par des éléments de forme 23, 24 coopérant entre eux pour empêcher l'extraction de l'embase dans la direction X1 ; l'embase est d'autre part ancrée contre la face interne 13c de la paroi 13 au moyen d'un coulisseau 30 sollicité par une vis de manoeuvre unique 31.

La vis 31 coopère par son filetage avec un trou taraudé 25 ménagé sur un côté de l'embase 20, vers une petite paroi 26 de longueur I de l'embase. L'axe X2 de la vis est parallèle à X1 et se trouve décalé d'une distance d par rapport à un plan médian Y de l'embase, cette distance d étant déterminée pour permettre de monter ou d'accéder à l'un quelconque de trois blocs de contact 22 de largeur l/3 fixés sous l'embase. A L'opposé de la paroi 26, l'embase à contour rectangulaire présente une petite paroi 27 et, entre les parois 26, 27, des grandes parois 28, 29, de manière à définir un évidement E de hauteur h1 sensiblement égale ou supérieure à la hauteur totale h2 du coulisseau. Le coulisseau est une pièce métallique massive découpée, pliée ou non pliée, en forme générale de U comportant une âme 32 et deux branches 33, 34 qui encadrent la partie tubulaire 12 du bouton-poussoir.

La vis de manoeuvre 31 présente une partie lisse 35 logée avec un jeu juste suffisant pour en permettre la rotation autour de X2 sans basculement dans un perçage ou alésage 36 ménagé dans l'âme 32 du coulisseau. Une rondelle ou collerette 37 est prévue sur la vis entre ses parties filetée et lisse pour transmettre au coulisseau l'effort de serrage. La partie lisse 35 de la vis peut être maintenue en 38, par exemple par un rebord venu de poinçonnage ou sertissage, par une rondelle ou autre élément analogue sur la face supérieure de l'âme 32. Dans un autre mode de réalisation plus compliquée, la vis peut être immobilisée en translation dans l'embase et être montée dans un trou taraudé du coulisseau.

Chaque branche 33, 34 du coulisseau présente par exemple une partie droite telle que 33a, perpendiculaire au plan P1 et au plan parallèle P2 (passant par X2), et une partie légèrement inclinée 33b formant un bras de fourche. Les branches peuvent être aussi droites. Dans tous les cas, elle comprennent vers leur extrémité libre une arête ou une pointe A1, A2, définie par un pan coupé 33c, afin de déterminer une droite d'appui A1, A2, parallèle au plan S du support et déplaçable sous l'effet de l'actionnement de la vis 31 dans un plan P3 parallèle à P1, perpendiculaire à S et situé, par rapport à l'axe X1 de la partie tubulaire, du côté opposé à l'axe X2 de la vis de manoeuvre.

Une zone d'appui supplémentaire A3 est prévue sur la face supérieure du coulisseau. Cette zone peut être située soit du côté de l'orifice 36 qui est opposé aux pointes d'ancrage A1, A2, soit dans l'axe de l'orifice 36. Dans le premier cas, elle est constituée par un téton d'appui (39) ou un pointeau d'ancrage ou bien, comme illustré en tirets sur la figure 2, par deux tétons ou pointeaux 39, disposés au bord du coulisseau du côté de la paroi 26. Quand il s'agit de tétons, ils peuvent affleurer à un niveau décalé d'un faible jeu par rapport à celui de A1, A2. De préférence, la zone de prise d'appui A3 est constituée par une pointe 40 prévue à l'extrémité supérieure de la vis 31 d'axe X2. La zone A3 est située sensiblement au niveau de A1, A2, de sorte que A1, A2, A3, déterminent un plan d'appui parallèle ou sensiblement parallèle à S, déplaçable perpendiculairement à celui-ci, et déterminent une résultante d'effort aussi proche que possible de l'axe X1 du bouton poussoir, compte-tenu des nécessaires contraintes de géométrie et de résistance du coulisseau. La présence de la zone de prise d'appui A3 permet de diminuer la sollicitation des branches 33, 34 du coulisseau et, par là, de réduire ses dimensions et son encombrement. Il convient d'observer que la localisation de la zone A3 au niveau du plan P2 ou au-delà de celui-ci par rapport à A1 et A2 réduit les frottements de la vis et donc l'effort de manoeuvre.

Le coulisseau peut être logé complètement dans le contour rectangulaire de l'embase ; il peut cependant comme indiqué figure 2 déborder d'une ouverture 26a de la paroi 26, la petite paroi opposée 27 étant dotée d'un retrait correspondant 27a pour permettre de juxtaposer en long des boutons-poussoir munis de leur embase. La distance d2 entre la droite d'appui A1, A2 - ou le plan P3 - et le plan P2 est égale ou supérieure à deux fois et est par exemple de l'ordre de quatre fois la distance d3 entre P2 et le plan P4 passant par A3.

Dans la variante de réalisation de la figure 4, les branches 33, 34 du coulisseau 30 s'étendent perpendiculairement à P1 et se terminent par des pointes A1, A2 sensiblement de même hauteur que la pointe 40 de la vis 31.

Le dispositif décrit fonctionne de la manière suivante. L'installateur engage la partie tubulaire 12 du bouton-poussoir dans l'orifice 13b de la paroi 13, puis engage l'embase 20 sur la partie tubulaire 12 jusqu'à la prise ou l'encliquetage des éléments 23, 24. Le coulisseau 30 est alors amené de sa position initiale effacée indiquée en tirets sur la figure 1 à la position de serrage indiquée en traits pleins, par rotation de la vis 31. Au cours de ce mouvement, le coulisseau est guidé par les faces externes de ses branches 33, 34 contre les faces internes des parois 28, 29 de l'embase et les pointes A1, A2 se déplacent rigoureusement dans le plan P3. Les pointes A1, A2 et la pointe 40 de la zone A3 sont appliquées contre la face 13c du support et le léger enfoncement des pointes dans la paroi 13 est absorbé par le jeu des filetages de la vis 31 et du trou taraudé 25.

## Revendications

1. Dispositif de commande ou de signalisation électrique tel que bouton-poussoir ou voyant comprenant :
- un corps (10) muni d'une tête (11) à poser sur une face externe d'une paroi de support (13) dotée d'un orifice et muni d'une partie tubulaire (12) à introduire dans cet orifice,
- une embase (20) destinée à recevoir de manière amovible un bloc électrique (22) tel qu'un bloc de contacts et rendue solidaire de la partie tubulaire (12) par des moyens d'arrêt,
- l'embase comportant des branches d'accrochage (33, 34) qui encadrent la partie tubulaire (12) agissant sur la face interne de la paroi de support et sollicitées par une vis de manoeuvre,
caractérisé par le fait que :
- l'embase (20) comporte un coulisseau (30) sollicité par la vis de manoeuvre (31);
- le coulisseau est lié à la vis et guidé en translation par des faces de guidage de l'embase ou de la partie tubulaire, de manière à se déplacer parallèlement à l'axe (X1) de la partie tubulaire,
- les branches d'accrochage (33,34) présentent chacune une arête ou pointe d'ancrage (A1, A2) définissant une droite d'appui déplaçable dans un plan (P3) perpendiculaire au plan (S) de la paroi de support.

2. Dispositif selon la revendication 1, caractérisé par le fait que le plan (P3) de déplacement de la droite d'appui (A1, A2) est situé, par rapport à l'axe (X1) de la partie tubulaire (12), du côté opposé à l'axe (X2) de la vis de manoeuvre.

3. Dispositif selon la revendication 1, caractérisé par le fait que le coulisseau (30) présente une âme (32) munie de l'orifice (36) de passage de la vis de manoeuvre (31) et, du côté de cet orifice qui est opposé à la droite d'appui (A1, A2), une zone complémentaire d'appui (A3) définissant avec la droite d'appui un plan d'appui sensiblement parallèle au plan (S) de la paroi de support et déplaçable perpendiculairement à celui-ci.

4. Dispositif selon la revendication 3, caractérisé par le fait que la zone complémentaire d'appui (A3) comprend une pointe (40) située à une extrémité de la vis de manoeuvre (31).

5. Dispositif selon la revendication 4, caractérisé par le fait que les pointes d'ancrage (A1, A2) des branches (33, 34) et la pointe (40) de la zone complémentaire d'appui (A3) ont sensiblement la même hauteur.

6. Dispositif selon la revendication 1, caractérisé par le fait que l'embase (20) présente un évidement (E) de hauteur (h1) sensiblement égale ou supérieure à la hauteur totale (h2) du coulisseau (30).

7. Dispositif selon la revendication 6, caractérisé par le fait que le coulisseau (30) est une pièce métallique massive découpée.

8. Dispositif selon la revendication 1, caractérisé par la fait que la vis de manoeuvre (31) présente une partie filetée qui coopère avec un trou taraudé (25) de l'embase (20) et une partie lisse (35) solidaire en translation et pouvant tourner sans basculement dans un alésage (36) du coulisseau, ainsi qu'entre la partie lisse et la partie filetée une collerette (37) appliquée sur le coulisseau.

## Patentansprüche

1. Elektrische Steuer- oder Anzeigevorrichtung wie beispielsweise ein Druckknopf oder eine Anzeigelampe, mit :
- einem Körper (10) mit einem Kopf (11), der an einer Aussenfläche einer Tragwand (13) anzubringen ist, die eine Öffnung aufweist und mit einem rohrförmigen, in diese Öffnung einzuführenden Teil (12) ausgestattet ist ;
- einem Sockel (20) zur herausnehmbaren Aufnahme eines Stromblocks (22), wie beispielsweise ein Kontaktblock, und der mit Arretiermitteln am rohrförmigen Teil (12) befestigt ist,
- wobei der Sockel Einhakzweige (33, 34) umfasst, die den rohrförmigen Teil (12) umgeben und an der Innenfläche der Tragwand wirken und von einer Betätigungsschraube beaufschlagt werden,
dadurch gekennzeichnet,
- dass der Sockel (20) einen von der Betätigungsschraube (31) beaufschlagten Stössel (30) umfasst;
- der Stössel mit der Schraube verbunden ist und in Translation von den Führungsflächen des Sockels oder des rohrförmigen Teils so geführt wird, dass er sich parallel zur Achse (X1) des rohrförmigen Teils verschiebt ;
- die Einhakzweige (33, 34) jeweils eine Verankerungskante bzw. -spitze (A1, A2) aufweisen, die eine Stützgerade definieren, die auf einer lotrecht zur Ebene (S) der Tragwand verlaufenden Ebene (P3) versetzt werden kann.

2. Vorrichtung nach Anspruch 1, dadurch gekennzeichnet, dass die Versetzungsebene (P3) der Stützgeraden (A1, A2) in Bezug auf die Achse (X1) des rohrförmigen Teils (12) gegenüber der Achse (X2) der Betätigungsschraube angeordnet ist.

3. Vorrichtung nach Anspruch 1, dadurch gekennzeichnet, dass der Stössel (30) eine Seele (32) mit einer Durchlassöffnung (36) für die Betätigungsschraube (31) aufweist, sowie auf der Seite dieser Öffnung, die der Stützgeraden (A1, A2) gegenüberliegt, eine zusätzliche Abstützzone (A3), die mit der Stützgeraden eine Abstützebene definiert, die etwa parallel zur Ebene (S) der Tragwand verläuft und lotrecht zur ihr versetzbar ist.

4. Vorrichtung nach Anspruch 3, dadurch gekennzeichnet, dass die zusätzliche Abstützzone (A3) eine an einem Ende der Betätigungsschraube (31) angeordnete Spitze (40) umfasst.

5. Vorrichtung nach Anspruch 4, dadurch gekennzeichnet, dass die Verankerungsspitzen (A1, A2) der Zweige (33, 34) und die Spitze (40) der zusätzlichen Abstützzone (A3) etwa die gleiche Höhe aufweisen.

6. Vorrichtung nach Anspruch 1, dadurch gekennzeichnet, dass der Sockel (20) eine Aussparung (E) aufweist, deren Höhe (h1) etwa der Gesamthöhe (h2) des Stössels (30) entspricht oder grösser ist.

7. Vorrichtung nach Anspruch 6, dadurch gekennzeichnet, dass der Stössel (30) ein massives, ausgestanztes Metallteil ist.

8. Vorrichtung nach Anspruch 1, dadurch gekennzeichnet, dass die Betätigungsschraube (31) einen gewundenen Teil aufweist, der mit einem Gewindeloch (25) des Sockels (20) zusammenwirkt, und einen glatten, translationsfesten Teil (35), der sich drehen kann, ohne in eine Bohrung (36) des Stössels zu kippen, sowie zwischen dem glatten Teil und dem gewundenen Teil einen auf den Stössel gedrückten Kragen (37).

## Claims

1. An electrical control or signalling device such as a push button or lamp including :
- a body (10) provided with a head (11) to be fixed on an external surface of a support wall (13) fitted with an orifice and provided with a tubular part to be introduced into this orifice,
- a baseplate (20) intended to receive, moveably, an electrical unit (22) such as a contact block and made integral with the tubular part (12) by stop means,
- the baseplate including attachment arms (33, 34) which surround the tubular part (12) acting on the internal surface of the support wall force being applied by a manipulation screw.
characterised by the fact that :
- the baseplate (20) includes a slide (30) acted upon by the manipulation screw (31) ;
- the slide is linked to the screw and guided in translation by guide surfaces on the baseplate or the tubular part in such a way that it is displaced parallel to the axis (X1) of the tubular part,
- the attachment arms (33, 34) each have a sharp edge or anchoring point (A1, A2) defining a support line which can be displaced within a plane (P3) perpendicular to the plane (S) of the support wall.

2. A device according to Claim 1, characterised in that the displacement plane (P3) of the support line (A1, A2) is located, with respect to the axis (X1) of the tubular part (12) on the opposite side of the axis (X2) of the manipulation screw.

3. A device according to Claim 1, characterised in that the slide (30) has a conductor (32) provided with the orifice (36) through which the manipulation screw (31) passes, and on the side of this orifice which is opposite to the support line (A1, A2), a complementary support area (A3) which defines, with the support line, a support plane, approximately parallel to the plane (S) of the support wall and which can be displaced perpendicular to it.

4. A device according to Claim 3, characterised in that the complementary support area (A3) includes point (40) located at one end of the manipulation screw (31).

5. A device according to Claim 4, characterised in that the anchoring points (A1, A2) of the arms (33, 34) and the point (40) of the complementary support area (A3) have approximately the same height.

6. A device according to Claim 1, characterised in that the baseplate (20) has a void space (E) of a height (h1) approximately equal or greater than the total height (h2) of the slide (30).

7. A device according to Claim 6, characterised by the fact that the slide (30) is a solid cut out metal component.

8. A device according to Claim 1, characterised by the fact that the manipulation screw (31) has a threaded part which works together with a tapped hole (25) in the baseplate and a smooth part (35) which is fixed in translation and is able to turn without tilting in a bore (36) in the slide and that between the smooth part and the threaded part there is a collar applied to the slide.
